# EUROPEAN PATENT SPECIFICATION

(11) **EP 2 749 970 B1**
(45) Date of publication and mention of the grant of the patent: **26.04.2017**
(21) Application number: 13199360.2
(22) Date of filing: 23.12.2013
(51) Int. Cl.: G05B 19/042, G05B 23/02, F16K 37/00

(54) **Safety instrument system and method for permitting PST**
Sicherheitsinstrumentensystem und Genehmigungsverfahren für einen PST
Système d'instrument de sécurité et procédé d'autorisation de lancement d'un PST

(30) Priority: 26.12.2012 JP 2012282328
(43) Date of publication of application: 02.07.2014
(73) Proprietor: Azbil Corporation, Chiyoda-ku Tokyo 100-6419 (JP)
(72) Inventor: Otsuka, Kenji, Tokyo, 100-6419 (JP)
(74) Representative: Lavoix

(56) References cited:
- US-A1- 2002 108 436
- US-A1- 2008 314 170
- US-B1- 7 828 008

## Description

The present invention relates to a safety instrument system for preserving safety in a plant, and to a PST initiating method.

US 2008/314170 A1 discloses a method for testing the functionality of armatures, e.g., of safety armatures, in process control systems.

US 7 828 008 B1 discloses a system and a method for partial stroke testing of a critical valve using a bypass valve includes flowing two streams of gas simultaneously through a bypass valve, opening the critical valve with the gas from the bypass valve, and determining a calibration time interval for closing the opened critical valve to a preset partial stroke testing position.

US 2002/108436 A1 discloses a partial stroke testing system for online testing of emergency shut-off valve, said system is designed for implementation on an emergency shut-off valve with a main solenoid with manual reset, main solenoid valve, quick exhaust valve and a pneumatic actuator connected to a source of pressurized air supply for opening and closing the said emergency shut-off valve and the said shut-off valve normally movable between a fully open and fully closed position. The system also include control means programmed into the plant emergency shutdown system controller for initiating electrical signal for initiating a test and for enhancing the bleed rate from the said pneumatic actuator in the event of a emergency trip signal.; Test means for testing the said emergency shut-off valve without fully closing the emergency shut-off valve in response to signal from the said control means is included in the system.

There are increasing demands for safety instrument systems (hereinafter termed "SIS") for protecting safety in a plant. In an SIS, and emergency cutoff valve is provided so as to ensure safety by cutting off using the emergency cutoff valve when a failure occurs in the plant. Under normal conditions, the emergency cutoff valve is held in the fully open state, and thus even if the emergency cutoff valve were to become stuck, so as to be in a state that could not function at the time of an emergency, it would be difficult to detect the emergency cutoff valve being stuck.

In order to detect such a fault, periodically a full-closure test of the emergency cutoff valve is performed off-line. The full-closure test must be performed at the time of a periodic inspection when the plant is shut down, and thus is costly. A partial stroke test (PST) is a test that checks the initial motion of the emergency cutoff valve by causing it to move just slightly, while the plant is operating, rather than fully closing the emergency cutoff valve. The time between full-closure tests can be extended through PSTs, thus reducing the preventive maintenance expense (see NISHIDA, June: "Newest Trends in Safety Instrument Systems: PST Solutions and General Solutions," Instrumentation 2006, Volume 49, No. 11, Kogyogijutsusha, 2006).

A safety instrument is controlled through PFD (Probability of Failure on Demand). The effect of the PST is that it is possible to extend the time between full-closure tests without changing the average value of the PFD between full-closure tests of the emergency cutoff valve. In order to keep the average value of the PFD to a planned value, it is necessary to perform the PSTs following a plan that is scheduled in advance. On the other hand, it is necessary to perform the PST while visually confirming the action of the emergency cutoff valve in the plant. In the technology described in Japanese Patent 4121378, a method is proposed for initiating a PST from the plant floor through a switch, or the like.

When a PST is executed there is an effect, albeit small, on the flow rate of the fluid flows through the emergency cutoff valve. Because of this, in the conventional technology disclosed in Patent Citation 1, when PSTs are executed simultaneously on a large number of emergency cutoff valves, it is possible that the adverse effect (the disruption) on the state of production of the product that is produced by the plant may be greater than anticipated.

The present invention was created to solve the problems set forth above, and the object thereof is to provide a safety instrument system and a PST initiating method able to prevent their from being a larger disruption than anticipated through simultaneous PST initiations.

A safety instrument system according to the present invention comprises: a plurality of positioners for controlling the degrees of opening of a plurality of emergency cutoff valves that are provided in pipes in a plant; and a higher-level system for controlling the PSTs of the emergency cutoff valves, wherein: each positioner comprises: PST executing portion for executing a PST in the emergency cutoff valve in response to an initiating instruction from the higher-level system or an initiating instruction from an inputting device at the site wherein the positioner is provided; PST execution status acquiring portion for acquiring PST execution status information for another positioner; PST initiation prohibition evaluating portion for evaluating whether or not a PST initiation is permitted, based on a PST execution status of another positioner, when a PST initiating instruction has been received from the higher-level system or from the inputting device.

A safety instrument system according to the present invention comprises: a plurality of positioners for controlling the degrees of opening of a plurality of emergency cutoff valves that are provided in pipes in a plant; and a higher-level system for controlling PSTs of the emergency cutoff valves, wherein: each positioner comprises: querying portion for querying the higher-level system as to whether or not PST initiation is permitted, when a PST initiating instruction has been received from the inputting device at the site where in the positioner is provided; and PST executing portion for executing a PST in the emergency cutoff valve in response to an initiating instruction from the higher-level system and for executing a PST in the emergency cutoff valve through an initiating instruction from an inputting device in response to a PST initiation permitted/prohibited report from the higher-level system, wherein: the higher-level system comprises: storing portion for storing a schedule for PSTs, established in advance; PST initiation instructing portion for sending, to the positioner, a PST initiating instruction following the schedule stored in the storing portion; PST execution status acquiring portion for acquiring PST execution status information for each positioner; PST initiation prohibition evaluating portion for evaluating whether or not to permit PST initiation based on the execution statuses of the PSTs of each of the positioners when there has been a query from a positioner as to whether or not PST initiation is permitted, for reporting to the positioner, and for evaluating whether or not to permit PST initiation based on the execution statuses of the PSTs of each of the positioners when PST initiation timing has been reached based on the schedule, and, if PST initiation is permitted, instructing the PST initiation instructing portion to send a PST initiating instruction to the positioner.

A safety instrument system according to the present invention comprises: a plurality of positioners for controlling the degrees of opening of a plurality of emergency cutoff valves that are provided in pipes in a plant; a plurality of flow rate measuring instruments for measuring flow rates of the process fluids that flow through the individual emergency cutoff valves; and a higher-level system for controlling PSTs of the emergency cutoff valves, wherein: each positioner comprises: PST executing portion for executing a PST in the emergency cutoff valve in response to an initiating instruction from the higher-level system or an initiating instruction from an inputting device at the site wherein the positioner is provided; PST execution status acquiring portion for acquiring PST execution status information for another positioner; flow rate measurement value acquiring portion for acquiring the flow rate measurement value from the corresponding flow rate measuring instrument; and PST initiation prohibition evaluating portion for evaluating whether or not a PST initiation is permitted, based on a PST execution status of another positioner, and on the flow rate of the process fluid flowing through the corresponding emergency cutoff valve, when a PST initiating instruction has been received from the higher-level system or from the inputting device.

A safety instrument system according to the present invention comprises: a plurality of positioners for controlling the degrees of opening of a plurality of emergency cutoff valves that are provided in pipes in a plant; a plurality of flow rate measuring instruments for measuring flow rates of the process fluids that flow through the individual emergency cutoff valves; and a higher-level system for controlling PSTs of the emergency cutoff valves, wherein: each positioner comprises: querying portion for querying the higher-level system as to whether or not PST initiation is permitted, when a PST initiating instruction has been received from the inputting device at the site where in the positioner is provided; and PST executing portion for executing a PST in the emergency cutoff valve in response to an initiating instruction from the higher-level system and for executing a PST in the emergency cutoff valve through an initiating instruction from an inputting device in response to a PST initiation permitted/prohibited report from the higher-level system, wherein: the higher-level system comprises: storing portion for storing a schedule for PSTs, established in advance; PST initiation instructing portion for sending, to the positioner, a PST initiating instruction following the schedule stored in the storing portion; PST execution status acquiring portion for acquiring PST execution status information for each positioner; flow rate measurement value acquiring portion for acquiring flow rate measurement values from each of the flow rate measuring instruments; and PST initiation prohibition evaluating portion for evaluating whether or not to permit PST initiation based on the execution statuses of the PSTs of each of the positioners and the flow rate of the process fluid flowing through the emergency cutoff valve corresponding to the positioner that made the query when there has been a query from a positioner as to whether or not PST initiation is permitted, for reporting to the positioner, and for evaluating whether or not to permit PST initiation based on the execution statuses of the PSTs of each of the positioners and the flow rate of the process fluid flowing through the emergency cutoff valve corresponding to the positioner that reached the PST initiation timing when PST initiation timing has been reached based on the schedule, and, if PST initiation is permitted, instructing the PST initiation instructing portion to send a PST initiating instruction to the positioner.

In the first configuration of a safety instrument system according to the present invention: the higher-level system includes the PST initiation prohibition evaluating portion, when there is a query from the positioner as to whether or not PST initiation is permitted, evaluates whether or not PST initiation is permitted based on the PST execution statuses of each of the positioners and on whether or not a positioner that is executing a PST belongs to the same system of pipes as the positioner of the query, reports to the positioner, and when PST initiation timing based on the schedule has been reached, the PST initiation prohibition evaluating portion evaluate whether or not PST initiation is permitted based on the PST execution statuses of the individual positioners and on whether or not a positioner that is executing a PST belongs to the same system of pipes as the positioner corresponding to the emergency cutoff valve that has reached the PST initiation timing, and if PST initiation is permitted, instructs the PST initiation instructing portion to send a PST initiating instruction to the positioner.

A method according to claim 6 is provided.

Moreover, the method according to the present invention includes: a querying step for querying the higher-level system that manages PSTs on the emergency cutoff valve as to whether or not PST initiation is permitted, when the positioner that controls the degree of opening of the emergency cutoff valve that is provided in a pipe in a plant has received a PST initiating instruction for the emergency cutoff valve from the inputting device at the site where in the positioner is provided; a PST executing step wherein the positioner executes a PST in the emergency cutoff valve in response to an initiating instruction from the higher-level system and for executing a PST in the emergency cutoff valve through an initiating instruction from an inputting device in response to a PST initiation permitted/prohibited report from the higher-level system; a first PST initiation prohibition evaluating step for acquiring PST execution status information for other positioners, for evaluating whether or not a PST initiation is permitted, based on the PST execution statuses of the other positioners, and for reporting to the positioner, when there has been a query from the positioner as to whether or not PST initiation is permitted; and a second PST initiation prohibition evaluating step wherein the higher-level system acquires PST execution status information for each of the positioners, evaluates whether or not PST initiation is permitted, based on the PST execution statuses of the individual positioners, and, if PST initiation is permitted, sends a PST initiating instruction to the positioner, if timing for a PST initiation has been reached based on the schedule.

Moreover, a method according to the present invention includes: a PST initiation prohibition evaluating step for acquiring PST execution status information for other positioners and for acquiring a flow rate measurement value from a flow rate measuring instrument for measuring a flow rate of a process fluid through a corresponding emergency cutoff valve, and for evaluating whether or not a PST initiation is permitted, based on the PST execution statuses of the other positioners and on a flow rate of a process fluid through a corresponding emergency cutoff valve, when a PST initiating instruction has been received by a positioner, for controlling the opening of an emergency cutoff valve that is provided in a pipe in a plant, from a higher-level system that manages PSTs on the emergency cutoff valve or from an inputting device on the plant floor wherein the positioner is provided; and a PST executing step wherein the positioner executes a PST on the emergency cutoff valve when PST initiation is permitted.

Moreover, a method according to the present invention includes: a querying step for querying the higher-level system that manages PSTs on the emergency cutoff valve as to whether or not PST initiation is permitted, when the positioner that controls the degree of opening of the emergency cutoff valve that is provided in a pipe in a plant has received a PST initiating instruction for the emergency cutoff valve from the inputting device at the site where in the positioner is provided; a PST executing step wherein the positioner executes a PST in the emergency cutoff valve in response to an initiating instruction from the higher-level system and for executing a PST in the emergency cutoff valve through an initiating instruction from an inputting device in response to a PST initiation permitted/prohibited report from the higher-level system; a first PST initiation prohibition evaluating step for acquiring PST execution status information for other positioners and for acquiring a flow rate measurement value from a flow rate measuring instrument for measuring a flow rate of a process fluid through a corresponding emergency cutoff valve, and for evaluating whether or not a PST initiation is permitted, based on the PST execution statuses of the other positioners and on a flow rate of a process fluid through a corresponding emergency cutoff valve, and for reporting to the positioner, when there has been a query from the positioner as to whether or not PST initiation is permitted; and a second PST initiation prohibition evaluating step for acquiring PST execution status information for other positioners and for acquiring a flow rate measurement value from a flow rate measuring instrument for measuring a flow rate of a process fluid through a corresponding emergency cutoff valve, for evaluating whether or not a PST initiation is permitted, based on the PST execution statuses of the other positioners and on a flow rate of a process fluid through an emergency cutoff valve for which the PST initiation timing has been reached, and for sending, to the positioner, a PST initiating instruction if PST initiation is permitted, when a PST initiation timing has been reached based on a schedule.

In the first configuration of the PST initiating method according to the present invention: the first PST initiation prohibition evaluating step, when there has been a query from the positioner as to whether or not PST initiation is permitted, evaluates whether or not a PST initiation is permitted, based on the PST execution statuses of each of the positioners and on whether or not a positioner that is executing a PST belongs to the same system of pipes as the positioner that made the query, and reports to the positioner; and the second PST initiation prohibition evaluating step, if timing for a PST initiation has been reached based on the schedule, evaluates whether or not PST initiation is permitted based on the PST execution statuses of the individual positioners and on whether or not a positioner that is executing a PST belongs to the same system of pipes as the positioner corresponding to the emergency cutoff valve for which the PST initiation timing has been reached, and, if PST initiation is permitted, sends a PST initiating instruction to the positioner.

According to an embodiment, a safety instrument system is provided comprising a plurality of positioners for controlling openings of a plurality of emergency cutoff valves that are provided in pipes in a plant, and a higher-level system for controlling the PSTs of the emergency cutoff valve. Each positioner comprises: a PST executing portion that executes a PST on an emergency cutoff valve in response to a startup instruction from the higher-level system or from an operating panel on the plant floor whereon the positioner is provided, a PST execution status acquiring portion for acquiring PST execution status information of another positioner, and a PST initiation prohibition evaluating portion for evaluating whether or not a PST initiation is permitted, based on the PST execution status of the other positioner, when a PST initiating instruction is received from the higher-level system or the operating panel.

With the present invention, when the positioner has received a PST initiating instruction from a higher-level system or from an inputting device, whether or not PST initiation is permitted is evaluated based on the state of execution of PSTs on other positioners, thus making it possible to prevent simultaneous execution of multiple PSTs, making it possible to suppress a larger-than-anticipated disruption to the plant that would result from simultaneous execution of multiple PSTs.

Moreover, with the present invention, when there is a query from a positioner as to whether or not PST initiation is permitted, or when the timing for PST initiation has been reached, whether or not PST initiation is permitted is evaluated based on the state of execution of PSTs of various positioners, thus making it possible to prevent simultaneous execution of multiple PSTs, making it possible to suppress a larger-than-anticipated disruption to the plant that would result from simultaneous execution of multiple PSTs.

Moreover, with the present invention, when the positioner has received a PST initiating instruction from a higher-level system or from an inputting device, whether or not PST initiation is permitted is evaluated based on the state of execution of PSTs on other positioners and on the flow rates of the process fluid that flows through the corresponding emergency cutoff valves, thus making it possible to relax the PST initiation prohibition conditions, and is possible to avoid excessive suppression of PSTs.

Moreover, with the present invention, when there is a query from a positioner as to whether or not a PST initiation is permitted, the higher-level system evaluates whether or not PST initiation is permitted, based on the PST execution statuses of the individual positioners and on the flow rate of the process fluid that flows through the emergency cutoff valve corresponding to the positioner that made the query, and if the PST initiation timing has been reached based on the schedule, the higher-level system evaluates whether or not PST initiation is permitted, based on the PST initiation statuses of the individual positioners and the flow rate of the process fluid flowing through the emergency cutoff valve that has reached the PST initiation timing, thus making it possible to relax the PST initiation prohibiting conditions, making it possible to avoid overly suppressing the PSTs.

Moreover, with the present invention, when there is a query from a positioner as to whether or not a PST initiation is permitted, the higher-level system evaluates whether or not PST initiation is permitted, based on the PST execution statuses of the individual positioners and on whether or not the positioner that is executing the PST belongs to the same system of pipes as the positioner that made the query, and if the PST initiation timing has been reached based on the schedule, the higher-level system evaluates whether or not PST initiation is permitted, based on the PST initiation statuses of the individual positioners and on whether or not the positioner that is executing the PST belongs to the same system of pipes as the positioner corresponding to the emergency cutoff valve that has reached the PST initiation timing, thus making it possible to relax the PST initiation prohibiting conditions, making it possible to avoid overly suppressing the PSTs.

Further advantages, features, aspects and details are evident from the dependent claims, the description and the drawings.

### [Brief Descriptions of the Drawings]

So that the manner in which the above recited features of the present invention can be understood in detail, a more particular description of the invention, briefly summarized above, may be read by reference to embodiments. The accompanying drawings relate to embodiments of the invention and are described in the following:
FIG. 1 is a block diagram illustrating a structure for a safety instrument system according to a first embodiment according to the present invention.
FIG. 2 is a block diagram illustrating a structure for a positioner and a higher-level system in the safety instrument system according to the first embodiment according to the present invention.
FIG. 3 is a flowchart illustrating the operation of the safety instrument system according to the first embodiment according to the present invention.
FIG. 4 is a block diagram illustrating a structure for a positioner and a higher-level system in the safety instrument system according to the second embodiment according to the present invention.
FIG. 5 is a flowchart illustrating the operation of the safety instrument system according to the second embodiment according to the present invention.
FIG. 6 is a block diagram illustrating a structure for a safety instrument system according to a third embodiment according to the present invention.
FIG. 7 is a block diagram illustrating a structure for a positioner and a higher-level system in the safety instrument system according to the third embodiment according to the present invention.
FIG. 8 is a block diagram illustrating a structure for a positioner and a higher-level system in the safety instrument system according to the fourth embodiment according to the present invention.
FIG. 9 is a diagram illustrating an example of piping in the plant.

### [Embodiments of the Present Invention]

In the present invention, the communication functions that are provided in the positioners are used so as to operate to prevent simultaneous execution of PSTs by multiple positioners. As a result, it is possible to reduce problems caused by unlimited PST initiation on the plant floor while maintaining flexibility for PST initiation depending on the situation on the plant floor.

### First Embodiment

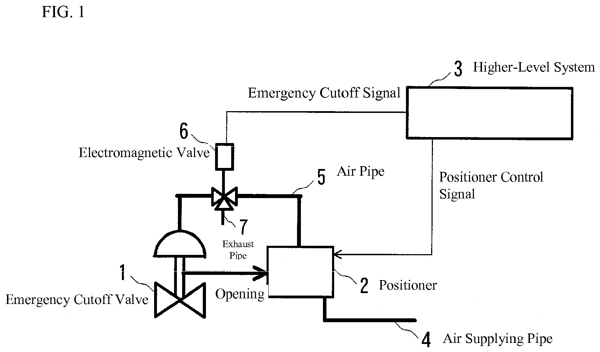

Forms for carrying out the present invention will be explained below in reference to the figures. FIG. 1 is a block diagram illustrating a structure for a safety instrument system according to a first embodiment according to the present invention.

An emergency cutoff valve 1 that is provided in order to prevent an incident in a plant is provided in a pipe in the plant and is driven pneumatically. A positioner 2 that controls the opening of the emergency cutoff valve 1 receives a positioner control signal from a higher-level system 3 that controls the maintenance of the various field devices in the plant, and, in response to an opening instruction value indicated by the positioner control signal, uses air that is supplied from an air supplying pipe 4 to send the required operating device air pressure to the emergency cutoff valve 1. The operating device air pressure from the positioner 2 is provided to the emergency cutoff valve 1 through an air pipe 5. Moreover, the positioner 2 is able to measure the degree of opening of the emergency cutoff valve 1 through an opening feedback mechanism.

At the time of an emergency cutoff, triggered by a fault in the plant, the emergency cutoff signal is sent from the higher-level system 3 to an electromagnetic valve 6 that is provided in the air pipe 5 between the positioner 2 and the emergency cutoff valve 1. In response to the emergency cutoff signal, the electromagnetic valve 6 opens the path of the air pipe 5 toward the air exhaust pipe 7, to release the operating device air pressure. The emergency cutoff valve 1 is closed thereby.

When a PST is executed, the degree of opening of the emergency cutoff valve 1 is varied, by the positioner 2, as, for example, 100% → 90% → 100%, making it possible to confirm the initial action of the emergency cutoff valve 1. The PST may be initiated by a positioner control signal from the higher-level system 3, and may also be initiated through a control panel, or the like, that is an inputting device that is provided on the positioner 2. One emergency cutoff valve 1 of this type, or a plurality thereof, is provided in the plant.

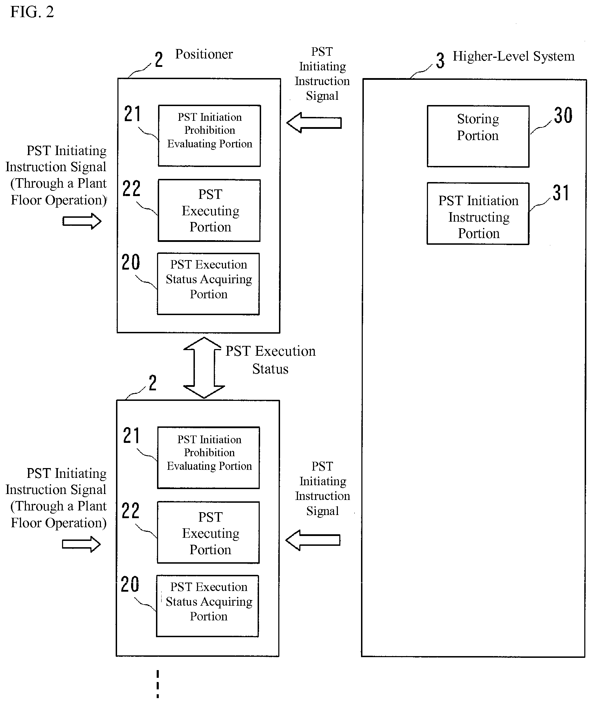

FIG. 2 is a block diagram illustrating a structure of a positioner 2 and a higher-level system 3 according to the present embodiment. In the present embodiment, a function for evaluating whether or not to initiate the PST is provided within the positioner 2.

A positioner 2 is provided for each emergency cutoff valve. Note that the present embodiment envisions a case wherein a plurality of emergency cutoff valves is provided in the same system of pipes. Each positioner 2 comprises: a PST execution status acquiring portion 20 for acquiring information on PST execution statuses of other positioners 2; a PST initiation prohibition evaluating portion 21 for evaluating whether or not PST initiation is permitted for a corresponding emergency cutoff valve 1; and a PST executing portion 22 for performing a PST on the corresponding emergency cutoff valve 1, and for evaluating PST completion, for performing fault evaluation on the emergency cutoff valve 1. The positioner 2 is able to receive both a PST initiating instruction signal that is inputted from an operating panel that is an inputting device, not shown, and a PST initiating instruction signal that is sent from the higher-level system 3.

The higher-level system 3 comprises: a storing portion 30 for storing, for each emergency cutoff valve, a PST schedule that has been established in advance; and a PST initiation instructing portion 31 for initiating PSTs in accordance with the schedule.

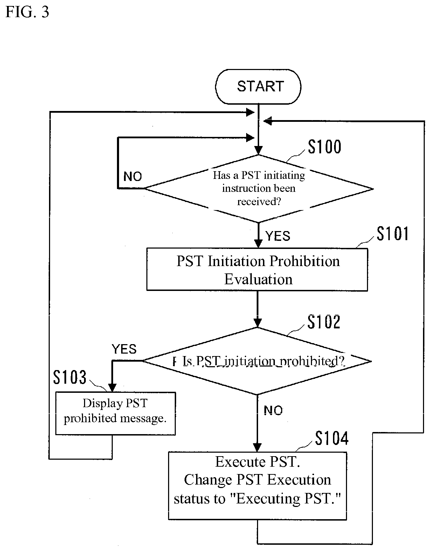

The operation of the safety instrument system of the present embodiment will be explained below in reference to FIG. 3. Following a schedule that is stored in the storing potion 30, the PST initiation instructing portion 31 of the higher-level system 3 periodically sends PST initiating instruction signals, for the individual emergency cutoff valves 1 to the corresponding positioners 2.

When a PST initiation prohibition evaluating portion 21 of an individual positioner 2 receives a PST initiating instruction signal from the operating panel of the positioner 2 or from the higher-level system 3 (YES in Step S100 in FIG. 3), PST execution status information of the other positioners 2 is acquired through a PST execution status acquiring portion 20, to evaluate whether or not the initiation of the PST on the corresponding emergency cutoff valve 1 is to be prohibited (Step S101 in the FIG. 3).

If a PST is being executed on another positioner 2, then the PST initiation prohibition evaluating portion 21 prohibits the initiation of a PST on the corresponding emergency cutoff valve 1 (YES in Step S102 of FIG. 3). Given this, the PST initiation prohibition evaluating portion 21 causes the display, on an outputting device such as the operating panel of the positioner 2, of a message to the effect that initiation of the PST is prohibited (Step S103 in FIG. 3). Conversely, the PST initiation prohibition evaluating portion 21 may send the message to the effect that initiation of the PST is prohibited to the higher-level system 3. In this case, the message is displayed on a display screen of the higher-level system 3.

Moreover, when there is no other positioner 2 that is executing a PST, the PST initiation prohibition evaluating portion 21 permits the initiation of a PST on the corresponding emergency cutoff valve 1 (NO in Step S102 in FIG. 3), and causes the PST executing portion 22 to execute the PST (Step S104 in FIG. 3). As described above, the PST executing portion 22 varies the opening of the emergency cutoff valve 1 as, for example, 100% → 90% → 100%, and checks the action of the emergency cutoff valve 1. As a result, the PST execution status of the positioner 2 that is executing the PST is changed to "PST executing." Although not illustrated in FIG. 3, at the point in time that the PST is completed, the PST execution status, of course, changes to "PST standby."

As described above, when, in the present embodiment, a PST is being executed on another positioner 2 belonging to the piping of the same system, the initiation of the PST is not permitted, thereby making it possible to suppress a larger-than-anticipated disruption to the plant that would result from simultaneous execution of multiple PSTs.

### Second Embodiment

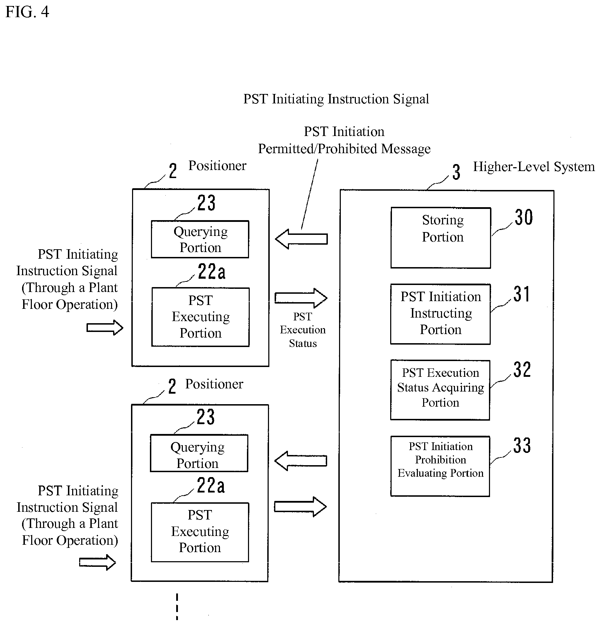

A second embodiment according to the present invention will be explained next. FIG. 4 is a block diagram illustrating a structure of a positioner 2 and a higher-level system 3 according to the present embodiment. In the present embodiment as well, the overall structure of the safety instrument system is identical to that of the first embodiment, and thus the explanation will use the codes of FIG. 1. In the first embodiment, evaluations as to whether or not to permit PST initiation were performed by positioners 2 individually. On the other hand, in the present embodiment the higher-level system 3 acquires PST execution status information for the positioners 2, to evaluate, based on this information, whether or not the PST initiations are permitted. As with the first embodiment, the present embodiment envisions a case wherein a plurality of emergency cutoff valves is provided in the same system of pipes.

The higher-level system 3 comprises: a storing portion 30; a PST initiation instructing portion 31; a PST execution status acquiring portion 32 for acquiring PST initiation status information of the individual positioners 2; and a PST initiation prohibition evaluating portion 33 for evaluating whether or not PST initiation is permitted for each of the individual emergency cutoff valves 1. In addition to the PST initiating instruction signals, signals for providing notification as to whether or not a PST initiation is permitted (PST initiation permitted/prohibited messages) are sent to the individual positioners 2 from the higher-level system 3.

Each positioner 2 comprises: a PST executing portion 22a for executing a PST on the corresponding emergency cutoff valve 1 in response to a PST initiation permitted/prohibited message that is sent from the higher-level system 3; and a querying portion 23 for sending a query to the higher-level system 3 as to whether or not PST initiation is permitted when a PST initiation instructing signal is received from an operating panel. As with the first embodiment, each positioner 2 is able to receive both a PST initiating instruction signal that is inputted from an operating panel that is an inputting device on the plant floor, and a PST initiating instruction signal that is sent from the higher-level system 3.

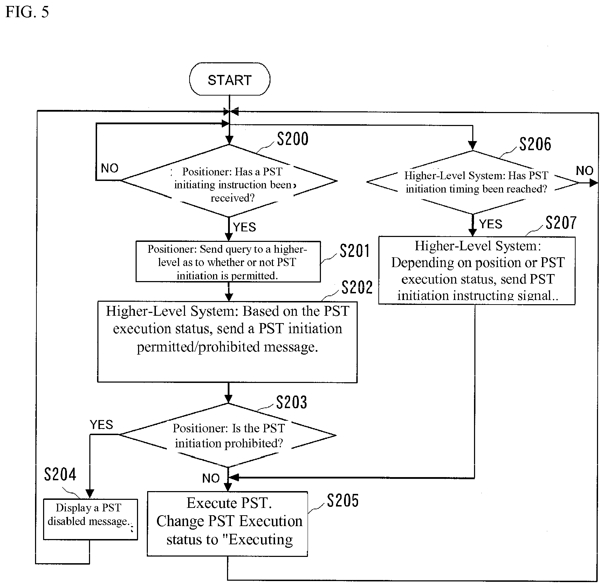

The operation of the safety instrument system of the present embodiment will be explained below in reference to FIG. 5. When a PST initiating instruction signal has been received from an operating panel of an individual positioner 2 (YES in Step S200 of FIG. 5), the querying portion 23 of the positioner 2 queries the higher-level system 3 as to whether or not the initiation of a PST is permitted (Step S201 in FIG. 5).

When a query is received from a positioner 2, the PST initiation prohibition evaluating portion 33 of the higher-level system 3 acquires PST execution status information for each of the positioners 2 through the PST execution status acquiring portion 32, and evaluates whether or not PST initiation is permitted for the positioner 2 that made the query, and sends the evaluation result to the positioner 2 that made the query (Step S202 in FIG. 5). If there is a positioner 2 wherein a PST is being performed, the PST initiation prohibition evaluating portion 33 sends a PST evaluation prohibiting message, and if there is no positioner 2 that is performing a PST, it sends a PST initiation permitting message.

When a PST initiation prohibiting message is received from the higher-level system 3 (YES in Step S203 of FIG. 5), the PST executing portion 22a of the positioner 2 that made the query to the higher-level system 3 causes a message to the effect that the PST initiation is prohibited to be displayed on an outputting device, such as the operating panel, of the positioner 2 (Step S204 in FIG. 5).

Moreover, if a PST initiation permitting message is received from the higher-level system 3 (NO in Step S203 of FIG. 5), the PST executing portion 22a executes the PST on the corresponding emergency cutoff valve 1 (Step S205 in FIG. 5). As a result, the PST execution status of the positioner 2 that is executing the PST is changed to "PST executing." Although not illustrated in FIG. 5, at the point in time that the PST is completed, the PST execution status, of course, changes to "PST standby."

On the other hand, the PST initiation prohibition evaluating portion 33 references the schedule that is stored in the storing portion 30, and if the evaluation is that the PST initiation timing has been reached for a given emergency cutoff valve 1 (YES in Step S206 in FIG. 5), it acquires the PST execution status information of the individual positioners 2 through the PST execution status acquiring portion 32, to evaluate whether or not to permit the initiation of the PST on the emergency cutoff valve 1 (Step S207 in FIG. 5). If there is a positioner 2 where a PST is being executed, then the PST initiation prohibition evaluating portion 33 prohibits the initiation of the PST. Moreover, if there is no positioner 2 that is executing a PST, the PST initiation prohibition evaluating portion 33 permits the initiation of the PST, and instructs the PST initiation instructing portion 31 to send the PST initiating instruction signal. In response to this instruction, the PST initiation instructing portion 31 sends a PST initiating instruction signal to the positioner 2 corresponding to the emergency cutoff valve 1 that has reached the timing for initiating the PST.

The PST executing portion 22a of the individual positioner 2, upon receipt of a PST initiating instruction signal from the higher-level system 3, executes a PST on the corresponding emergency cutoff valve 1.

Consequently, it is possible to reduce problems caused by unlimited PST initiation on the individual plant floors while maintaining flexibility for PST initiation depending on the situation on the plant floor, through using the communication functions that are provided in the positioners 2 so as to operate to prevent simultaneous execution of PSTs by multiple positioners 2. The first embodiment applied to a relatively few, that is 2 or 3, positioners 2 for which simultaneous execution of PSTs is to be avoided. On the other hand, the present embodiment applies to the case wherein the scope of the plant is large, in a design that combines prohibition of simultaneous PST execution for a large number of positioners 2.

### Third Embodiment

A third embodiment according to the present invention will be explained next. The first and second embodiments were embodiments wherein simply simultaneous execution of PSTs was prohibited. However, there is the potential for excessively suppressing plant floor evaluations because even cases wherein there would be an adverse effect through simultaneous PST execution are subject to prohibition. The action of the PST is an action that reduces the flow rate for the fluid that flows through the emergency cutoff valve, and thus there are many cases wherein it is possible to specify in advance a range over which the effect of the PST on the pre-PST initiation fluid flow rate would not be a problem. Consequently, by setting, based on the flow rate, a limited range wherein PST initiation is not prohibited it is possible to relax excessive suppression of PSTs.

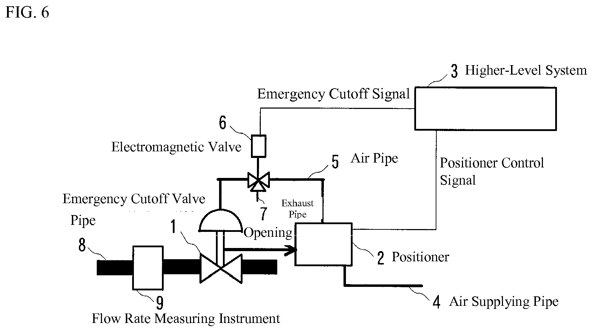

FIG. 6 is a block diagram illustrating a structure of a safety instrument system according to the present embodiment, where structures identical to those of FIG. 1 are assigned identical codes. In the safety instrument system according to the present embodiment, flow rate measuring instruments 9, for measuring flow rates of the process fluids that pass through the emergency cutoff valves 1 near the emergency cutoff valves 1 that are provided in the plant piping 8 are added to the structure in the first embodiment that is illustrated in FIG. 1. A flow rate measuring instrument 9 is provided for each emergency cutoff valve.

The positioner 2 is able to monitor, through some portions, the measurement result of the flow rate measuring instrument 9. As specific portion, one may consider a portion for receiving analog measurement signals from the flow rate measuring instrument 9, or a portion for receiving digital measurement data through a DCS (Distributed Control System). As with the first embodiment, the present embodiment envisions a case wherein a plurality of emergency cutoff valves is provided in the same system of pipes.

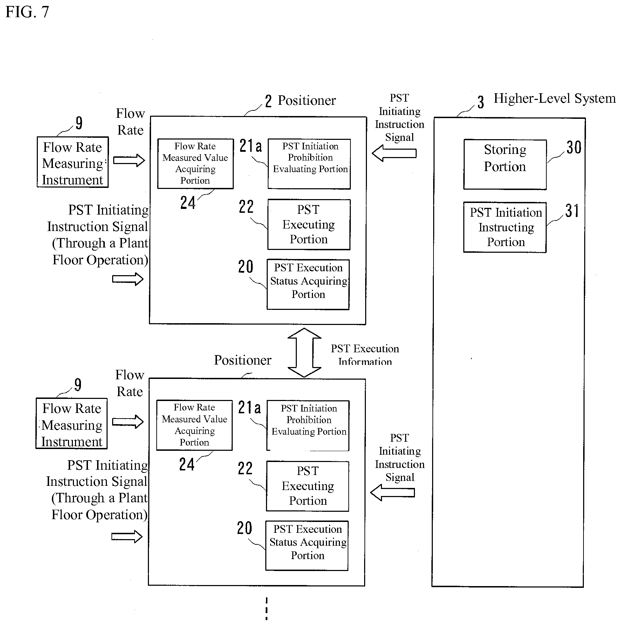

FIG. 7 is a block diagram illustrating a structure of a positioner 2 and a higher-level system 3 according to the present embodiment, where structures identical to those of FIG. 2 are assigned identical codes. The higher-level system 3 comprises: a storing portion 30; a PST initiation instructing portion 31. Each positioner 2 comprises a PST execution status acquiring portion 20, a PST initiation prohibition evaluating portion 21a, a PST executing portion 22, and a flow rate measurement value acquiring portion 24 for acquiring a flow rate measurement value for the process fluid from the flow rate measuring instrument 9. As with the first embodiment, each positioner 2 is able to receive both a PST initiating instruction signal that is inputted from an operating panel that is an inputting device on the plant floor, and a PST initiating instruction signal that is sent from the higher-level system 3.

In the present embodiment, the flow of processes of the controlling device is identical to that in the first embodiment, so FIG. 3 will be used to explain the operation of the safety instrument system according to the present embodiment. When a PST initiation prohibition evaluating portion 21a of an individual positioner 2 receives a PST initiating instruction signal from the operating panel of the positioner 2 or from the higher-level system 3 (YES in Step S100 in FIG. 3), PST execution status information of the other positioners 2 is acquired through a PST execution status acquiring portion 20, and a flow rate measurement value is acquired from the corresponding flow rate measuring instrument 9 through the flow rate measurement value acquiring portion 24, to evaluate whether or not the initiation of the PST on the corresponding emergency cutoff valve 1 is to be prohibited (Step S101 in the FIG. 3).

If a PST is being executed on another positioner 2, the PST initiation prohibition evaluating portion 21a checks the flow rate measurement value acquired from the flow rate measuring instrument 9, and prohibits the initiation of a PST on the corresponding emergency cutoff valve 1 if the current flow rate of the process fluid that flows through the corresponding emergency cutoff valve 1 is outside of a specified range (YES in Step S102 of FIG. 3). Given this, the PST initiation prohibition evaluating portion 21 either causes the display, on an outputting device such as the operating panel of the positioner 2, of a message to the effect that initiation of the PST is prohibited, or sends, to the higher-level system 3, a message to the effect that the PST is prohibited (Step S103 in FIG. 3).

Moreover, when there is no other positioner 2 that is executing a PST, or if another positioner 2 is executing a PST and the current process fluid that flows in the corresponding emergency cutoff valve 1 is within a specified range, the PST initiation prohibition evaluating portion 21a permits the initiation of a PST on the corresponding emergency cutoff valve 1 (NO in Step S102 in FIG. 3), and causes the PST executing portion 22 to execute the PST (Step S104 in FIG. 3).

As described above, in the present embodiment the addition, to the evaluation criteria, of the flow rate of the process fluid that flows through the emergency cutoff valve 1 makes it possible to permit PST initiation in cases wherein the flow rate of the process fluid that flows through the corresponding emergency cutoff valve 1 is within the specified range, even if there is another positioner 2, belonging to the same system of pipes, that is executing a PST, thus making it possible to relax the PST initiation prohibiting conditions, making it possible to avoid excessive suppression of PSTs.

### Fourth Embodiment

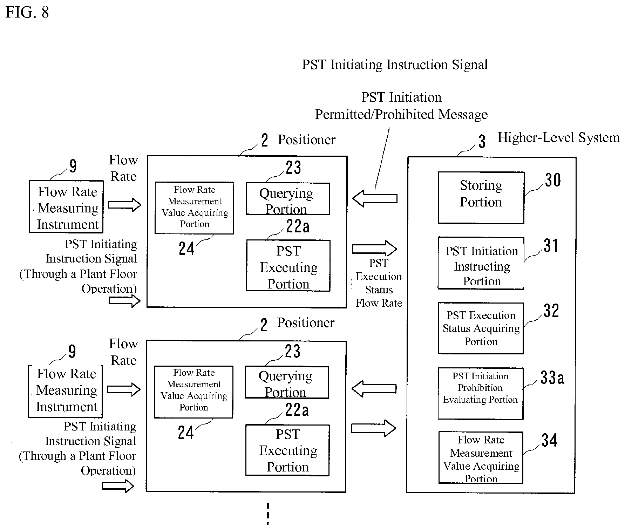

A fourth embodiment according to the present invention will be explained next. FIG. 8 is a block diagram illustrating a structure of a positioner 2 and a higher-level system 3 according to the present embodiment, where structures identical to those of FIG. 4 are assigned identical codes. In the present embodiment as well, the overall structure of the safety instrument system is identical to that of the third embodiment, and thus the explanation will use the codes of FIG. 6. In the third embodiment, evaluations as to whether or not to permit PST initiation were performed by positioners 2 individually. On the other hand, in the present embodiment the higher-level system 3 acquires PST execution status information for the positioners 2 and flow rate measurement values for the flow rate measuring instruments 9, to evaluate, based on this information, whether or not the PST initiations are permitted. As with the first embodiment, the present embodiment envisions a case wherein a plurality of emergency cutoff valves is provided in the same system of pipes.

The higher-level system 3 comprises: a storing portion 30; a PST initiation instructing portion 31; a PST execution status acquiring portion 32; a PST initiation prohibition evaluating portion 33a; and a flow rate measurement value acquiring portion 34 for acquiring the flow rate measurement values for the process fluids from each of the flow rate measuring instruments 9 through each of the positioners 2. Each positioner 2 comprises a PST executing portion 22a, a querying portion 23, and a flow rate measurement value acquiring portion 24.

In the present embodiment, the flow of processes of the controlling device is identical to that in the second embodiment, so FIG. 5 will be used to explain the operation of the safety instrument system according to the present embodiment. The processes in Step S200 and S201 of FIG. 5 are as were explained in the second embodiment. The PST initiation prohibition evaluating portion 33a of the higher-level system 3, upon receipt of a query from a positioner 2, acquires PST execution status information from each of the positioners 2 through the PST execution status acquiring portion 32, acquires the flow rate measurement values from each of the flow rate measuring instruments 9 through the flow rate measurement value acquiring portions 24 of the individual positioners 2 and the flow rate measurement value acquiring portion 34 of the higher-level system 3, evaluates whether or not PST initiation is permitted for the positioner 2 that made the query, and sends the evaluation result to the positioner 2 that made the query (Step S202 in FIG. 5).

If there is a positioner 2 that is executing a PST, the PST initiation prohibition evaluating portion 33a checks the flow rate measurement values acquired from the individual flow rate measuring instruments 9, and if the current flow rate of the process fluid through the emergency cutoff valve 1 corresponding to the positioner 2 that made the query is outside of the specified range, sends a PST initiation prohibiting message. Moreover, when there is no other positioner 2 that is executing a PST, or if there is another positioner 2 that is executing a PST and the current flow rate of the process fluid that flows in the emergency cutoff valve 1 corresponding to a positioner 2 that made the query is within a specified range, the PST initiation prohibition evaluating portion 33a sends a PST initiation permitted message. The processes in Step S203 through S205 of FIG. 5 are as were explained in the second embodiment.

Moreover, the PST initiation prohibition evaluating portion 33a references the schedule that is stored in the storing portion 30, and if the evaluation is that the PST initiation timing has been reached for a given emergency cutoff valve 1 (YES in Step S206 in FIG. 5), then, along with acquiring the PST execution statuses of the individual positioners 2 through the PST execution status acquiring portion 32, it acquires the flow rate measurement values from each of the flow rate measuring instruments 9 through the flow rate measured value acquiring portions 24 of the individual positioners 2 and the flow rate measurement value acquiring portion 34 of the higher-level system 3, to evaluate whether or not to permit the initiation of the PST on the emergency cutoff valve 1 (Step S207 in FIG. 5).

If a PST there is a positioner 2 that is executing a PST, the PST initiation prohibition evaluating portion 33a checks the flow rate measurement values acquired from each of the flow rate measuring instruments 9, and prohibits the initiation of the PST if the current flow rate of the process fluid that flows through the emergency cutoff valve 1 for which the PST initiation timing has arrived is outside of a specified range. Moreover, when there is no other positioner 2 that is executing a PST, or if there is another positioner 2 that is executing a PST and the current flow rate of the process fluid that flows in the emergency cutoff valve 1 for which the PST initiation timing has arrived, is within a specified range, the PST initiation prohibition evaluating portion 33a allows the PST initiation and instructs the PST initiation instructing portion 31 to send the PST initiating instruction signal. In response to this instruction, the PST initiation instructing portion 31 sends a PST initiating instruction signal to the positioner 2 corresponding to the emergency cutoff valve 1 that has reached the timing for initiating the PST.

As described above, as with the third embodiment, the present embodiment makes it possible to relax the PST initiation prohibiting conditions, to thereby avoid excessive suppression of PSTs.

Note that while in the present embodiment the flow rate measurement value for each individual flow rate measuring instrument 9 was obtained through the individual positioners 2, there is no limitation thereto, but rather the flow rate measurement values for the individual flow rate measuring instruments 9 may be obtained through another system, such as a DCS.

### [Fifth Embodiment]

A fifth embodiment according to the present invention will be explained next. The first through fourth embodiments envision cases wherein a plurality of emergency cutoff valves is provided in the same system of pipes. In contrast, the present embodiment envisions a case wherein at least one of the plurality of emergency cutoff valves is provided in a different system of pipes. In the present embodiment as well, the overall structure of the safety instrument system is identical to that of the first embodiment, and thus the explanation will use the codes of FIG. 1. Moreover, the structure the positioner 2 and the higher-level system 3 is identical to that of the second embodiment, and thus the explanation will use the codes of FIG. 4.

In the present embodiment, the flow of processes of the controlling device is identical to that in the second embodiment, so FIG. 5 will be used to explain the operation of the safety instrument system according to the present embodiment. The processes in Step S200 and S201 of FIG. 5 are as were explained in the second embodiment. When a query is received from a positioner 2, the PST initiation prohibition evaluating portion 33 of the higher-level system 3 acquires PST execution status information for each of the positioners 2 through the PST execution status acquiring portion 32, and evaluates whether or not PST initiation is permitted for the positioner 2 that made the query, and sends the evaluation result to the positioner 2 that made the query (Step S202 in FIG. 5).

When there is another positioner 2 belonging to the same system of pipes as the positioner 2 that made the query and that is executing a PST, the PST initiation prohibition evaluating portion 33 sends a PST initiation prohibiting message, and if there is no other positioner 2, belonging to the same system of pipes of the positioner 2 that made the query and that is performing a PST, it sends a PST initiation permitting message. The PST initiation prohibition evaluating portion 33 stores in advance the correspondence relationships of the emergency cutoff valves 1 and the positioners 2 and the system of pipes, making it possible to evaluate whether or not PST initiation is permitted based on the correspondence relationships.

Moreover, the PST initiation prohibition evaluating portion 33 references the schedule that is stored in the storing portion 30, and if the evaluation is that the PST initiation timing has been reached for a given emergency cutoff valve 1 (YES in Step S206 in FIG. 5), it acquires the PST execution status information of the individual positioners 2 through the PST execution status acquiring portion 32, to evaluate whether or not to permit the initiation of the PST on the emergency cutoff valve 1 (Step S207 in FIG. 5).

If there is another positioner 2 is performing a PST and that belongs to the same system of pipes as the positioner 2 corresponding to the emergency cutoff valve 1 that has reached the PST initiation timing, the PST initiation prohibition evaluating portion 33 prohibits PST initiation. Moreover, if there is no other positioner 2, executing a PST, belonging to the same system of pipes as the positioner 2 corresponding to the emergency cutoff valve 1 for which the PST initiation timing has been reached, the PST initiation prohibition evaluating portion 33 permits the initiation of the PST, and instructs the PST initiation instructing portion 31 to send the PST initiating instruction signal. In response to this instruction, the PST initiation instructing portion 31 sends a PST initiating instruction signal to the positioner 2 corresponding to the emergency cutoff valve 1 that has reached the timing for initiating the PST.

In the present embodiment, as described above, the addition of whether or not another positioner 2 belonging to the same system of pipes is executing a PST as an evaluation criterion, and permitting PST initiation when the positioner 2 for which the positioner 2 is attempting to initiate a PST belongs to a different system of pipes, even if another positioner 2 is executing a PST, makes it possible to relax the PST initiation prohibiting conditions, thus making it possible to avoid excessive suppression of PSTs.

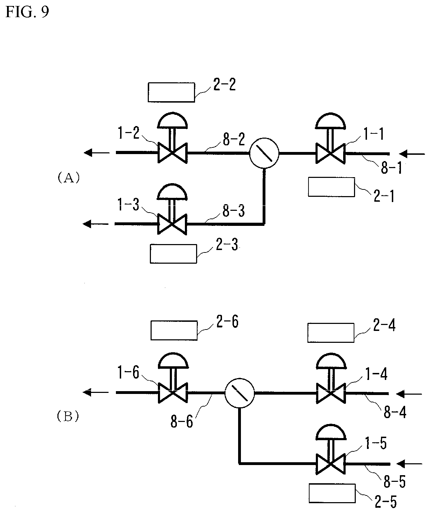

FIG. 9(A) and FIG. 9(B) are diagrams illustrating an example of piping in the plant. FIG. 9 (A) illustrates a case wherein the flow path can be switched selectively from the pipe 8-1 to the pipe 8-2 or the pipe 8-3. In this case, the emergency cutoff valve 1-1 that is provided in the pipe 8-1 and the positioner 2-1 for controlling the emergency cutoff valve 1-1, belong to the same system of pipes as the emergency cutoff valve 1-2 that is provided in the pipe 8-2 and the positioner 2-2 for controlling the emergency cutoff valve 1-2, and the emergency cutoff valve 1-3 that is provided in the pipe 8-3 and the positioner 2-3 for controlling the emergency cutoff valve 1-3 also belong to the same system of pipes. On the other hand, the emergency cutoff valve 1-2 and the positioner 2-2 belong to a different system of pipes than the emergency cutoff valve 1-3 and the positioner 2-3.

FIG. 9 (B) illustrates a case wherein the flow path can be switched selectively from the pipe 8-6 to the pipe 8-4 or the pipe 8-5. In this case, the emergency cutoff valve 1-6 that is provided in the pipe 8-6 and the positioner 2-6 for controlling the emergency cutoff valve 1-6, belong to the same system of pipes as the emergency cutoff valve 1-4 that is provided in the pipe 8-4 and the positioner 2-4 for controlling the emergency cutoff valve 1-4, and the emergency cutoff valve 1-5 that is provided in the pipe 8-5 and the positioner 2-5 for controlling the emergency cutoff valve 1-5 also belong to the same system of pipes. On the other hand, the emergency cutoff valve 1-4 and the positioner 2-4 belong to a different system of pipes than the emergency cutoff valve 1-5 and the positioner 2-5.

Note that each of the positioners 2 and the higher-level systems 3 described in the first through fifth embodiments can each be embodied through a computer that comprises a CPU (Central Processing Unit), a storage device, and an interface, along with a program for controlling these hardware resources. The CPUs for the individual devices execute the procedures described in the first through fifth embodiments following programs that are stored in the storage devices.

The present invention can be applied to partial stroke testing of emergency cutoff valves that are provided in order to prevent incidents in a plant.

### [List of Reference signs]

- 1:: Emergency Cutoff Valve
- 2:: Positioner
- 3:: Higher-Level System
- 4:: Air Supplying Pipe
- 5:: Air Pipe
- 6:: Electromagnetic Valve
- 7:: Exhaust Pipe
- 8:: Pipe
- 9:: Flow Rate Measuring Device
- 20, 32:: PST Execution Status Acquiring Portions
- 21, 21a, 33, 33a:: PST Initiation Prohibition Evaluating Portions
- 22, 22a:: PST Executing Portions
- 23:: Querying Portion
- 24, 34:: Flow Rate Measurement Value Acquiring Portion
- 30:: Storing Portion
- 31:: PST Initiation Instructing Portion

## Claims

1. A safety instrument system comprising:
a plurality of positioners (2) for controlling the degrees of opening of a plurality of emergency cutoff valves (1) that are provided in pipes in a plant; and
a higher-level system (3) for controlling partial stroke tests, PSTs, of the emergency cutoff valves, wherein:
each positioner (2) comprises:
a PST executing portion (22) for executing a PST in the emergency cutoff valve in response to an initiating instruction from the higher-level system or an initiating instruction from an inputting device at the site wherein the positioner is provided;
a PST execution status acquiring portion (20) for acquiring PST execution status information for another positioner;
a PST initiation prohibition evaluating portion (21, 21 a) for evaluating whether or not a PST initiation is permitted, based on a PST execution status of another positioner, when a PST initiating instruction has been received from the higher-level system or from the inputting device.

2. A safety instrument system comprising:
a plurality of positioners (2) for controlling the degrees of opening of a plurality of emergency cutoff valves (1) that are provided in pipes in a plant; and
a higher-level system (3) for controlling partial stroke tests, PSTs, of the emergency cutoff valves (1), wherein:
each positioner comprises:
a querying portion (23) for querying the higher-level system (3) as to whether or not PST initiation is permitted, when a PST initiating instruction has been received from the inputting device at the site where in the positioner is provided; and
a PST executing portion (22a) for executing a PST in the emergency cutoff valve in response to an initiating instruction from the higher-level system and for executing a PST in the emergency cutoff valve through an initiating instruction from an inputting device in response to a PST initiation permitted/prohibited report from the higher-level system, wherein:
the higher-level system (3) comprises:
storing portion (30) for storing a schedule for PSTs, established in advance;
a PST initiation instructing portion (31) for sending, to the positioner, a PST initiating instruction following the schedule stored in the storing portion;
a PST execution status acquiring portion (32) for acquiring PST execution status information for each positioner (2);
a PST initiation prohibition evaluating portion (33) for evaluating whether or not to permit PST initiation based on the execution statuses of the PSTs of each of the positioners when there has been a query from a positioner as to whether or not PST initiation is permitted, for reporting to the positioner, and for evaluating whether or not to permit PST initiation based on the execution statuses of the PSTs of each of the positioners when PST initiation timing has been reached based on the schedule, and, if PST initiation is permitted, instructing the PST initiation instructing portion to send a PST initiating instruction to the positioner.

3. A safety instrument system according to claim 1 further comprising:
a plurality of flow rate measuring instruments (9) for measuring flow rates of the process fluids that flow through the individual emergency cutoff valves, wherein
each positioner further comprises:
flow rate measurement value acquiring portion (24) for acquiring the flow rate measurement value from the corresponding flow rate measuring instrument, wherein the PST initiation prohibition evaluating portion (21, 21 a) is adapted to evaluate whether or not a PST initiation is permitted, based further on the flow rate of the process fluid flowing through the corresponding emergency cutoff valve, when a PST initiating instruction has been received from the higher-level system or from the inputting device.

4. A safety instrument system according to claim 2, further comprising:
a plurality of flow rate measuring instruments (9) for measuring flow rates of the process fluids that flow through the individual emergency cutoff valves;
Wherein the higher-level system further comprises:
flow rate measurement value acquiring portion (34) for acquiring flow rate measurement values from each of the flow rate measuring instruments (9); wherein
the PST initiation prohibition evaluating portion is adapted for evaluating whether or not to permit PST initiation based further on the flow rate of the process fluid flowing through the emergency cutoff valve corresponding to the positioner that made the query as to whether or not PST initiation is permitted, for reporting to the positioner, and for evaluating whether or not to permit PST initiation based on the execution statuses of the PSTs of each of the positioners and the flow rate of the process fluid flowing through the emergency cutoff valve corresponding to the positioner (2) that reached the PST initiation timing when PST initiation timing has been reached based on the schedule, and, if PST initiation is permitted, instructing the PST initiation instructing portion to send a PST initiating instruction to the positioner.

5. A safety instrument system as set forth in Claim 2, wherein:
the PST initiation prohibition evaluating portion (33), when there is a query from the positioner (2) as to whether or not PST initiation is permitted, evaluates whether or not PST initiation is permitted based on the PST execution statuses of each of the positioners (2) and on whether or not a positioner that is executing a PST belongs to the same system of pipes as the positioner of the query, reports to the positioner, and when PST initiation timing based on the schedule has been reached, the PST initiation prohibition evaluating portion evaluate whether or not PST initiation is permitted based on the PST execution statuses of the individual positioners and on whether or not a positioner that is executing a PST belongs to the same system of pipes as the positioner corresponding to the emergency cutoff valve that has reached the PST initiation timing, and if PST initiation is permitted, instructs the PST initiation instructing portion to send a PST initiating instruction to the positioner.

6. A PST executing method for a safety instrument system comprising a higher level system (3) and a plurality of positioners (2), the plurality of positioners (2) comprising a first positioner and one or more second positioners, the method including:
a PST initiation prohibition evaluating step (S101) for acquiring partial stroke test, PST, execution status information for the one or more second positioners (2) and for evaluating whether or not a PST initiation is permitted, based on the PST execution statuses of the one or more second positioners (2), when a PST initiating instruction has been received by the first positioner (2), for controlling the opening of an emergency cutoff valve (1) that is provided in a pipe in a plant, from the higher-level system that manages PSTs on the emergency cutoff valve or from an inputting device on the plant floor wherein the first positioner is provided; and
a PST executing step (S104) wherein the first positioner executes a PST on the emergency cutoff valve when PST initiation is permitted.

7. A PST executing method for a safety instrument system comprising a higher level system (3) and a plurality of positioners (2), the plurality of positioners (2) comprising a first positioner and one or more second positioners, the method comprising:
a querying step (S201) for querying the higher-level system that manages PSTs on the emergency cutoff valve as to whether or not PST initiation is permitted, when the first positioner (2) that controls the degree of opening of the emergency cutoff valve that is provided in a pipe in a plant has received (S200) a PST initiating instruction for the emergency cutoff valve from the inputting device at the site where in the first positioner is provided;
a PST executing step (S205) wherein the first positioner executes a PST in the emergency cutoff valve in response to an initiating instruction (S207) from the higher-level system (3) and executes a PST in the emergency cutoff valve through an initiating instruction (S200) from an inputting device in response to a PST initiation permitted/prohibited report (S202) from the higher-level system;
a first PST initiation prohibition evaluating step for acquiring PST execution status information for one or more second positioners (2), for evaluating whether or not a PST initiation is permitted, based on the PST execution statuses of the one or more second positioners (2), and for reporting (S202) to the first positioner (2), when there has been a query from the first positioner (2) as to whether or not PST initiation is permitted; and
a second PST initiation prohibition evaluating step wherein the higher-level system (3) acquires PST execution status information for each of the positioners (2), evaluates whether or not PST initiation is permitted, based on the PST execution statuses of the individual positioners (2), and, if PST initiation is permitted, sends (S207) a PST initiating instruction to the first positioner, if timing (S206) for a PST initiation has been reached based on the schedule.

8. The PST executing method according to claim 6, wherein
the PST initiation prohibition evaluating step (S101) is further adapted for measuring a flow rate of a process fluid through a corresponding emergency cutoff valve, and for evaluating whether or not a PST initiation is permitted, based on the PST execution statuses of the one or more second positioners (2) and on a flow rate of a process fluid through a corresponding emergency cutoff valve, when a PST initiating instruction has been received by the first positioner, for controlling the opening of an emergency cutoff valve that is provided in a pipe in a plant, from a higher-level system (3) that manages PSTs on the emergency cutoff valve (1) or from an inputting device on the plant floor wherein the first positioner is provided.

9. The PST executing method according to claim 7, wherein
the first PST initiation prohibition evaluating step is further adapted for acquiring a flow rate measurement value from a flow rate measuring instrument (9) for measuring a flow rate of a process fluid through a corresponding emergency cutoff valve (1), and for evaluating whether or not a PST initiation is permitted, based on the PST execution statuses of the one or more second positioners (2) and on a flow rate of a process fluid through a corresponding emergency cutoff valve, and for reporting to the first positioner, when there has been a query from the first positioner (2) as to whether or not PST initiation is permitted; and
the second PST initiation prohibition evaluating step is further adapted for acquiring a flow rate measurement value from a flow rate measuring instrument (9) for measuring a flow rate of a process fluid through a corresponding emergency cutoff valve (1), for evaluating whether or not a PST initiation is permitted, based on the PST execution statuses of the one or more second positioners and on a flow rate of a process fluid through an emergency cutoff valve (1) for which the PST initiation timing has been reached, and for sending, to the first positioner, a PST initiating instruction if PST initiation is permitted, when a PST initiation timing has been reached based on a schedule.

10. A PST executing method as set forth in Claim 7, wherein:
the first PST initiation prohibition evaluating step, when there has been a query (S201) from the first positioner (2) as to whether or not PST initiation is permitted, evaluates whether or not a PST initiation is permitted, based on the PST execution statuses of each of the one or more second positioners (2) and on whether or not a second positioner that is executing a PST belongs to the same system of pipes (1) as the first positioner that made the query, and reports to the first positioner; and
the second PST initiation prohibition evaluating step, if timing for a PST initiation has been reached (S206) based on the schedule, evaluates whether or not PST initiation is permitted based on the PST execution statuses of the individual positioners and on whether or not a second positioner that is executing a PST belongs to the same system of pipes as the first positioner corresponding to the emergency cutoff valve (1) for which the PST initiation timing has been reached, and, if PST initiation is permitted, sends a PST initiating instruction to the first positioner.

## Patentansprüche

1. Sicherheitsinstrumentensystem, umfassend:
eine Vielzahl von Stellungsreglern (2) zum Steuern der Öffnungsgrade einer Vielzahl von Notabsperrventilen (1), die in Rohren in einer Anlage bereitgestellt sind; und
ein übergeordnetes System (3) zum Steuern von Teilhubtests, PSTs, der Notabsperrventile, wobei:
jeder Stellungsregler (2) Folgendes umfasst:
einen PST-Ausführungsabschnitt (22) zum Ausführen eines PST im Notabsperrventil in Reaktion auf eine Initiierungsanweisung vom übergeordneten System oder einer Initiierungsanweisung von einer Eingabevorrichtung an der Stelle, an der der Stellungsregler bereitgestellt ist;
einen PST-Ausführungszustands-Erfassungsabschnitt (20) zum Erfassen von PST-Ausführungszustands-Informationen für einen weiteren Stellungsregler;
einen PST-Ausführungszustands-Bewertungsabschnitt (21, 21 a) zum Bewerten, ob eine PST-Initiierung zulässig ist oder nicht, basierend auf dem PST-Ausführungszustand eines weiteren Stellungsreglers, wenn eine PST-Initiierungsanweisung vom übergeordneten System oder von der Eingabevorrichtung erhalten wurde.

2. Sicherheitsinstrumentensystem, umfassend:
eine Vielzahl von Stellungsreglern (2) zum Steuern der Öffnungsgrade einer Vielzahl von Notabsperrventilen (1), die in Rohren in einer Anlage bereitgestellt sind; und
ein übergeordnetes System (3) zum Steuern von Teilhubtests, PSTs, der Notabsperrventile (1), wobei:
jeder Stellungsregler Folgendes umfasst:
einen Abfrageabschnitt (23) zum Abfragen des übergeordneten Systems (3), ob eine PST-Initiierung zulässig ist oder nicht, wenn eine PST-Initiierungsanweisung von der Eingabevorrichtung an der Stelle erhalten wurde, an der der Stellungsregler bereitgestellt ist; und
einen PST-Ausführungsabschnitt (22a) zum Ausführen eines PST im Notabsperrventil in Reaktion auf einen Initiierungsanweisung vom übergeordneten System und zum Ausführen eines PST im Notabsperrventil durch eine Initiierungsanweisung von einer Eingabevorrichtung in Reaktion auf einen Bericht der zulässigen/unzulässigen PST-Initiierung vom übergeordneten System, wobei:
das übergeordnete System (3) Folgendes umfasst:
einen Speicherabschnitt (30) zum Speichern eines Plans für PSTs, der im Voraus festgesetzt ist;
einen PST-Initiierungsanweisungsabschnitt (31) zum Senden einer PST-Initiierungsanweisung an den Stellungsregler, gemäß dem Plan, der im Speicherabschnitt abgelegt wurde;
einen PST-Ausführungszustands-Erfassungsabschnitt (32) zum Erfassen von PST-Ausführungszustandsinformationen für jeden Stellungsregler (2);
einen PST-Ausführungszustands-Bewertungsabschnitt (33) zum Bewerten, ob eine PST-Initiierung basierend auf den Ausführungszuständen der PSTs von jedem der Stellungsregler zulässig st oder nicht, wenn eine Abfrage von einem Stellungsregler durchgeführt wurde, ob eine PST-Initiierung zulässig ist oder nicht, um an den Stellungsregler zu berichten, und zum Bewerten, ob eine PST-Initiierung basierend auf den Ausführungszuständen der PSTs von jedem der Stellungsregler zulässig ist oder nicht, wenn der PST-Initiierungszeitpunkt basierend auf dem Plan erreicht worden ist, und, wenn eine PST-Initiierung zulässig ist, Anweisen des PST-Initiierungsanweisungsabschnitts, eine PST-Initiierungsanweisung an den Stellungsregler zu schicken.

3. Sicherheitsinstrumentensystem nach Anspruch 1, weiter umfassend:
eine Vielzahl von Durchflussraten-Messgeräten (9) zum Messen von Durchflussraten der Prozessflüssigkeiten, die durch die einzelnen Notabsperrventile fließen; wobei
jeder Stellungsregler weiter Folgendes umfasst:
einen Durchflußraten-Messwert-Erfassungsabschnitt (24) zum Erfassen des Durchflussraten-Messwerts vom entsprechenden Durchflussraten-Messinstrument, wobei der PST-Initiierungsunzulässigkeits-Bewertungsabschnitt (21, 21a) ausgelegt ist, um zu bewerten, ob eine PST-Initiierung zulässig ist oder nicht, basierend weiter auf der Durchflussrate der Prozessflüssigkeit, die durch das entsprechende Notabsperrventil fließt, wenn eine PST-Initiierungsanweisung vom übergeordneten System oder von der Eingabevorrichtung erhalten wurde.

4. Sicherheitsinstrumentensystem nach Anspruch 2, weiter umfassend:
eine Vielzahl von Durchflussraten-Messgeräten (9) zum Messen von Durchflussraten der Prozessflüssigkeiten, die durch die einzelnen Notabsperrventile fließen;
wobei das übergeordnete System weiter Folgendes umfasst:
einen Durchflußraten-Messwert-Erfassungsabschnitt (34) zum Erfassen der Durchflussraten-Messwerte von jedem der Durchflussraten-Messinstrumente (9), wobei
der PST-Initiierungsunzulässigkeits-Bewertungsabschnitt ausgelegt ist, um zu bewerten, ob eine PST-Initiierung zulässig ist oder nicht, basierend weiter auf der Durchflussrate der Prozessflüssigkeit, die durch das Notabsperrventil fließt, das dem Stellungsregler entspricht, der die Anfrage machte, oder eine PST-Initiierung zulässig ist oder nicht, um dem Stellungsregler zu berichten, und um zu bewerten, ob eine PST-Initiierung zulässig ist oder nicht, basierend auf Ausführungszuständen der PSTs jedes der Stellungsregler und der Durchflussrate des Prozessflüssigkeit, die durch das Notabsperrventil fließt, das dem Stellungsregler (2) entspricht, das den PST-Initiierungszeitpunkt erreicht hat, wenn der PST-Initiierungszeitpunkt basierend auf dem Plan erreicht worden ist, und, wenn eine PST-Initiierung zulässig ist, Anweisen des PST-Initiierungsanweisungsabschnitts, eine PST-Initiierungsanweisung an den Stellungsregler zu schicken.

5. Sicherheitsinstrumentensystem nach Anspruch 2, wobei
der PST-Initiierungsunzulässigkeits-Bewertungsabschnitt (33), wenn eine Abfrage von einem Stellungsregler (2) durchgeführt wurde, ob eine PST-Initiierung zulässig ist, bewertet, ob die PST-Initiierung zulässig ist oder nicht, basierend auf den PST-Ausführungszuständen jedes der Stellungsregler (2) und darauf, ob ein Stellungsregler, der einen PST durchführt, zum gleichen System von Rohren wie der Stellungsregler der Anfrage gehört oder nicht, dem Stellungsregler berichtet, und wenn ein PST-Initiierungszeitpunkt basierend auf dem Plan erreicht wurde, bewertet der PST-Initiierungsunzulässigkeits-Bewertungsabschnitt, ob die PST-Initiierung basierend auf den PST-Ausführungszuständen der einzelnen Stellungsregler zulässig ist oder nicht, und ob ein Stellungsregler, der einen PST durchführt, zum gleichen System von Rohren wie der Stellungsregler gehört oder nicht, der dem Notabsperrventil entspricht, das den PST-Initiierungszeitpunkt erreicht hat, und, wenn eine PST-Initiierung zulässig ist, den PST-Initiierungsanweisungsabschnitt anweist, eine PST-Initiierungsanweisung an den Stellungsregler zu schicken.

6. PST-Ausführungsverfahren für ein Sicherheitsinstrumentensystem, umfassend ein übergeordnetes System (3) und eine Vielzahl von Stellungsreglern (2), wobei die Vielzahl von Stellungsreglern (2) einen ersten Stellungsregler und einen oder mehrere zweite Stellungsregler umfasst, wobei das Verfahren Folgendes aufweist:
einen PST-Ausführungszustands-Erfassungsschritt (S101), um eine Teilhubtest, PST, Ausführungszustands-Information für das eine oder die mehreren Stellungsregler (2) zu erfassen um zu bewerten, ob eine PST-Initiierung zulässig ist oder nicht, basierend auf den PST-Ausführungszuständen des einen oder der mehreren zweiten Stellungsregler (2), wenn eine PST-Initiierungsanweisung vom ersten Stellungsregler (2) erhalten wurde, um die Öffnung eines Notabsperrventils (1), das in einem Rohr in einer Anlage bereitgestellt ist, vom übergeordneten System, das die PSTs auf dem Notabsperrventil verwaltet, oder von einer Eingabevorrichtung auf dem Anlageboden, in dem der erste Stellungsregler bereitgestellt ist, zu steuern; und
einen PST-Ausführungsschritt (S104), wobei der erste Stellungsregler einen PST auf dem Notabsperrventil durchführt, wenn eine PST-Initiierung zulässig ist.

7. PST-Ausführungsverfahren für ein Sicherheitsinstrumentensystem, umfassend ein übergeordnetes System (3) und eine Vielzahl von Stellungsreglern (2), wobei die Vielzahl von Stellungsreglern (2) einen ersten Stellungsregler und einen oder mehrere zweite Stellungsregler umfasst, wobei das Verfahren Folgendes umfasst:
einen Anfrageschritt (S102) zum Anfragen des übergeordneten Systems, das die PSTs auf dem Notabsperrventil verwaltet, ob eine PST-Initiierung zulässig ist oder nicht, wenn der erste Stellungsregler (2), der den Öffnungsgrad des Notabsperrventils steuert, das in einem Rohr in einer Anlage (S200) bereitgestellt ist, eine PST-Initiierungsanweisung für das Notabsperrventil von der Eingabevorrichtung an der Stelle erhalten hat, an der der erste Stellungsregler bereitgestellt ist.
einen PST-Ausführungsschritt (S205), wobei der erster Stellungsregler einen PST im Notabsperrventil in Reaktion auf einen Initiierungsanweisung (S207) vom übergeordneten System durchführt und einen PST im Notabsperrventil durch eine Initiierungsanweisung (S200) von einer Eingabevorrichtung in Reaktion auf einen Bericht der zulässigen/unzulässigen PST-Initiierung (S220) vom übergeordneten System durchführt;
einen ersten PST-Initiierungsunzulässigkeits-Bewertungsschritt zum Erfassen von PST-Ausführungszustands-Informationen für einen oder für mehrere zweite Stellungsregler (2), um zu bewerten, ob eine PST-Initiierung zulässig ist oder nicht, basierend auf den PST-Ausführungszuständen des einen oder der mehreren zweiten Stellungsregler (2), und um dem ersten Stellungsregler (2) zu berichten (S202), wenn eine Abfrage vom ersten Stellungsregler (2) durchgeführt wurde, ob eine PST-Initiierung zulässig ist oder nicht; und
einen zweiten PST-Initiierungsunzulässigkeits-Bewertungsschritt, wobei das übergeordnete System (3) PST-Ausführungszustands-Informationen für jeden der Stellungsregler (2) erfasst, bewertet, ob eine PST-Initiierung zulässig ist oder nicht, basierend auf den PST-Ausführungszuständen der einzelnen Stellungsregler (2), und, wenn eine PST-Initiierung zulässig ist, eine PST-Initiierungsanweisung an den ersten Stellungsregler schickt (S207), wenn der Zeitpunkt (206) für eine PST-Initiierung basierend auf dem Plan erreicht worden ist,

8. PST-Ausführungsverfahren nach Anspruch 6, wobei
der PST-Initiierungsunzulässigkeits-Bewertungsschritt (S101) weiter ausgelegt ist, um eine Durchflussrate einer Prozessflüssigkeit durch ein entsprechendes Notabsperrventil zu messen, und um zu bewerten, ob eine PST-Initiierung zulässig ist oder nicht, basierend auf den PST-Ausführungszuständen des einen oder der mehreren zweiten Stellungsregler (2), und einer Durchflussrate einer Prozessflüssigkeit durch ein entsprechendes Notabsperrventil, wenn eine PST-Initiierungsanweisung vom ersten Stellungsregler erhalten wurde, um die Öffnung eines Notabsperrventils, das in einem Rohr in einer Anlage bereitgestellt ist, von einem übergeordneten System (3), das die PSTs auf dem Notabsperrventil verwaltet, oder von einer Eingabevorrichtung auf dem Anlageboden, in dem der erste Stellungsregler bereitgestellt ist, zu steuern.

9. PST-Ausführungsverfahren nach Anspruch 7, wobei
der erste PST-Initiierungsunzulässigkeits-Bewertungsschritt weiter ausgelegt ist, um einen Durchflussraten-Messwert von einem Durchflussraten-Messinstrument (9) zu erfassen, um eine Durchflussrate einer Prozessflüssigkeit durch ein entsprechendes Notabsperrventil (1) zu messen, um zu bewerten, ob eine PST-Initiierung zulässig ist oder nicht, basierend auf den PST-Ausführungszuständen des einen oder der mehreren zweiten Stellungsregler (2), und einer Durchflussrate einer Prozessflüssigkeit durch ein entsprechendes Notabsperrventil, und um dem ersten Stellungsregler zu berichten, wenn eine Abfrage vom ersten Stellungsregler (2) durchgeführt wurde, ob eine PST-Initiierung zulässig ist oder nicht; und
der zweite PST-Initiierungsunzulässigkeits-Bewertungsschritt weiter ausgelegt ist, um den Durchflussraten-Messwerts von einem Durchflussraten-Messinstrument (9) zu erfassen, um eine Durchflussrate einer Prozessflüssigkeit durch ein entsprechendes Notabsperrventil (1) zu messen, um zu bewerten, ob eine PST-Initiierung zulässig ist oder nicht, basierend auf den PST-Ausführungszuständen des einen oder der mehreren zweiten Stellungsregler, und einer Durchflussrate einer Prozessflüssigkeit durch ein entsprechendes Notabsperrventil (1), für das der PST-Initiierungszeitpunkt erreicht wurde, und um, an den ersten Stellungsregler, eine PST-Initiierungsanweisung zu senden, wenn eine PST-Initiierung zulässig ist, wenn ein PST-Initiierungszeitpunkt basierend auf dem Plan erreicht worden ist.

10. PST-Ausführungsverfahren nach Anspruch 7, wobei
der erste PST-Initiierungsunzulässigkeits-Bewertungsschritt, wenn eine Anfrage (S201) vom ersten Stellungsregler (2) durchgeführt wurde, ob eine PST-Initiierung zulässig ist oder nicht, bewertet, ob eine PST-Initiierung zulässig ist oder nicht, basierend auf den PST-Ausführungszuständen jedes des einen oder der mehreren zweiten Stellungsregler (2), und ob ein zweiter Stellungsregler, der einen PST durchführt, zum gleichen Rohrsystem (1) wie der erste Stellungsregler gehört oder nicht, der die Anfrage gemacht hat, und an den ersten Stellungsregler berichtet; und
der zweite PST-Initiierungsunzulässigkeits-Bewertungsschritt, wenn der Zeitpunkt für eine PST-Initiierung basierend auf dem Plan erreicht worden ist (S206), bewertet, ob die PST-Initiierung basierend auf den PST-Ausführungszuständen der einzelnen Stellungsregler zulässig ist oder nicht, und ob ein zweiter Stellungsregler, der eine PST durchführt, zum gleichen Rohrsystem wie der erste Stellungsregler gehört oder nicht, der dem Notlabsperrventil (1) entspricht, für das der PST-Initiierungszeitpunkt erreicht wurde, und, wenn eine PST-Initiierung zulässig ist, eine PST-Initiierungsanweisung an den ersten Stellungsregler schickt.

## Revendications

1. Système d'instrument de sécurité comprenant :
une pluralité de positionneurs (2) pour commander les degrés d'ouverture d'une pluralité de soupapes de détente d'urgence (1) qui sont prévues dans des tuyaux dans une installation ; et
un système de niveau plus élevé (3) pour commander des tests de course partielle, PST, des soupapes de détente d'urgence, dans lequel :
chaque positionneur (2) comprend :
une partie d'exécution de PST (22) pour exécuter un PST dans la soupape de détente d'urgence en réponse à une instruction de lancement provenant du système de niveau plus élevé ou à une instruction de lancement provenant d'un dispositif d'entrée au niveau du site où le positionneur est prévu ;
une partie d'acquisition d'état d'exécution de PST (20) pour acquérir des informations d'état d'exécution de PST pour un autre positionneur ;
une partie d'évaluation d'interdiction de lancement de PST (21, 21 a) pour évaluer si, oui ou non, un lancement de PST est autorisé, sur la base d'un état d'exécution de PST d'un autre positionneur, lorsqu'une instruction de lancement de PST a été reçue du système de niveau plus élevé ou du dispositif d'entrée.

2. Système d'instrument de sécurité comprenant :
une pluralité de positionneurs (2) pour commander les degrés d'ouverture d'une pluralité de soupapes de détente d'urgence (1) qui sont prévues dans des tuyaux dans une installation ; et
un système de niveau plus élevé (3) pour commander des tests de course partielle, PST, des soupapes de détente d'urgence (1), dans lequel :
chaque positionneur comprend :
une partie d'interrogation (23) pour interroger le système de niveau plus élevé (3) pour savoir si, oui ou non, un lancement de PST est autorisé, lorsqu'une instruction de lancement de PST a été reçue du dispositif d'entrée au niveau du site où le positionneur est prévu ; et
une partie d'exécution de PST (22a) pour exécuter un PST dans la soupape de détente d'urgence en réponse à une instruction de lancement provenant du système de niveau plus élevé et pour exécuter un PST dans la soupape de détente d'urgence par une instruction de lancement provenant d'un dispositif d'entrée en réponse à un rapport d'autorisation/d'interdiction de lancement de PST provenant du système de niveau plus élevé, dans lequel :
le système de niveau plus élevé (3) comprend :
une partie de mémorisation (30) pour mémoriser une planification pour des PST, établie à l'avance ;
une partie d'instruction de lancement de PST (31) pour envoyer, au positionneur, une instruction de lancement de PST à la suite de la planification mémorisée dans la partie de mémorisation ;
une partie d'acquisition d'état d'exécution de PST (32) pour acquérir des informations d'état d'exécution de PST pour chaque positionneur (2) ;
une partie d'évaluation d'interdiction de lancement de PST (33) pour évaluer s'il faut, oui ou non, permettre un lancement de PST sur la base des états d'exécution des PST de chacun des positionneurs lorsqu'il y a eu une interrogation d'un positionneur pour savoir si, oui ou non, un lancement de PST est autorisé, pour rapporter au positionneur, et pour évaluer s'il faut, oui ou non, permettre un lancement de PST sur la base des états d'exécution des PST de chacun des positionneurs lorsqu'une synchronisation de lancement de PST a été atteinte sur la base de la planification, et, si un lancement de PST est autorisé, pour ordonner à la partie d'instruction de lancement de PST d'envoyer une instruction de lancement de PST au positionneur.

3. Système d'instrument de sécurité selon la revendication 1, comprenant en outre :
une pluralité d'instruments de mesure de débit (9) pour mesurer les débits des fluides de processus qui s'écoulent à travers les soupapes de détente d'urgence individuelles, dans lequel
chaque positionneur comprend en outre :
une partie d'acquisition de valeur de mesure de débit (24) pour acquérir la valeur de mesure de débit de l'instrument de mesure de débit correspondant, dans lequel la partie d'évaluation d'interdiction de lancement de PST (21, 21 a) est conçue pour évaluer si, oui ou non, un lancement de PST est autorisé, sur la base en outre du débit du fluide de processus s'écoulant à travers la soupape de détente d'urgence correspondante, lorsqu'une instruction de lancement de PST a été reçue du système de niveau plus élevé ou du dispositif d'entrée.

4. Système d'instrument de sécurité selon la revendication 2, comprenant en outre :
une pluralité d'instruments de mesure de débit (9) pour mesurer les débits des fluides de processus qui s'écoulent à travers les soupapes de détente d'urgence individuelles ;
dans lequel le système de niveau plus élevé comprend en outre :
une partie d'acquisition de valeur de mesure de débit (34) pour acquérir des valeurs de mesure de débit de chacun des instruments de mesure de débit (9) ; dans lequel
la partie d'évaluation d'interdiction de lancement de PST est conçue pour évaluer s'il faut, oui ou non, permettre un lancement de PST sur la base en outre du débit du fluide de processus s'écoulant à travers la soupape de détente d'urgence correspondant au positionneur qui a effectué l'interrogation pour savoir si, oui ou non, un lancement de PST est autorisé, pour rapporter au positionneur, et pour évaluer s'il faut, oui ou non, permettre un lancement de PST sur la base des états d'exécution des PST de chacun des positionneurs et du débit du fluide de processus s'écoulant à travers la soupape de détente d'urgence correspondant au positionneur (2) qui a atteint la synchronisation de lancement de PST lorsque la synchronisation de lancement de PST a été atteinte sur la base de la planification, et, si un lancement de PST est autorisé, pour ordonner à la partie d'instruction de lancement de PST d'envoyer une instruction de lancement de PST au positionneur.

5. Système d'instrument de sécurité selon la revendication 2, dans lequel :
la partie d'évaluation d'interdiction de lancement de PST (33), lorsqu'il y a une interrogation provenant du positionneur (2) pour savoir si, oui ou non, un lancement de PST est autorisé, évalue si, oui ou non, un lancement de PST est autorisé sur la base des états d'exécution de PST de chacun des positionneurs (2) et selon qu'un positionneur qui exécute un PST appartient ou non au même système de tuyaux que le positionneur de l'interrogation, rapporte au positionneur, et lorsqu'une synchronisation de lancement de PST a été atteinte sur la base de la planification, la partie d'évaluation d'interdiction de lancement de PST évalue si, oui ou non, un lancement de PST est autorisé sur la base des états d'exécution de PST des positionneurs individuels et selon qu'un positionneur qui exécute un PST appartient ou non au même système de tuyaux que le positionneur correspondant à la soupape de détente d'urgence qui a atteint la synchronisation de lancement de PST, et, si un lancement de PST est autorisé, ordonne à la partie d'instruction de lancement de PST d'envoyer une instruction de lancement de PST au positionneur.

6. Procédé d'exécution de PST pour un système d'instrument de sécurité comprenant un système de niveau plus élevé (3) et une pluralité de positionneurs (2), la pluralité de positionneurs (2) comprenant un premier positionneur et un ou plusieurs deuxièmes positionneurs, le procédé comprenant :
une étape d'évaluation d'interdiction de lancement de PST (S101) pour acquérir des informations d'état d'exécution de test de course partielle, PST, pour lesdits un ou plusieurs deuxièmes positionneurs (2) et pour évaluer si, oui ou non, un lancement de PST est autorisé, sur la base des états d'exécution de PST desdits un ou plusieurs deuxièmes positionneurs (2), lorsqu'une instruction de lancement de PST a été reçue par le premier positionneur (2), pour commander l'ouverture d'une soupape de détente d'urgence (1) qui est prévue dans un tuyau dans une installation, du système de niveau plus élevé prévu dans un tuyau dans une installation, qui gère les PST sur la soupape de détente d'urgence, ou d'un dispositif d'entrée sur le sol de l'installation où le premier positionneur est prévu ; et
une étape d'exécution de PST (S104) à laquelle le premier positionneur exécute un PST sur la soupape de détente d'urgence lorsqu'un lancement de PST est autorisé.

7. Procédé d'exécution de PST pour un système d'instrument de sécurité comprenant un système de niveau plus élevé (3) et une pluralité de positionneurs (2), la pluralité de positionneurs (2) comprenant un premier positionneur et un ou plusieurs deuxièmes positionneurs, le procédé comprenant :
une étape d'interrogation (S201) pour interroger le système de niveau plus élevé qui gère les PST sur la soupape de détente d'urgence pour savoir si, oui ou non, un lancement de PST est autorisé, lorsque le premier positionneur (2) qui commande le degré d'ouverture de la soupape de détente d'urgence qui est prévue dans un tuyau dans une installation a reçu (S200) une instruction de lancement de PST pour la soupape de détente d'urgence du dispositif d'entrée au niveau du site où le premier positionneur est prévu ;
une étape d'exécution de PST (S205) à laquelle le premier positionneur exécute un PST dans la soupape de détente d'urgence en réponse à une instruction de lancement (S207) provenant du système de niveau plus élevé (3) et exécute un PST dans la soupape de détente d'urgence par une instruction de lancement (S200) provenant d'un dispositif d'entrée en réponse à un rapport d'autorisation/d'interdiction de lancement de PST (S202) provenant du système de niveau plus élevé ;
une première étape d'évaluation d'interdiction de lancement de PST pour acquérir des informations d'état d'exécution de PST pour un ou plusieurs deuxièmes positionneurs (2), pour évaluer si, oui ou non, un lancement de PST est autorisé, sur la base des états d'exécution de PST desdits un ou plusieurs deuxièmes positionneurs (2), et pour rapporter (S202) au premier positionneur (2), lorsqu'il y a eu une interrogation du premier positionneur (2) pour savoir si, oui ou non, un lancement de PST est autorisé ; et
une deuxième étape d'évaluation d'interdiction de lancement de PST à laquelle le système de niveau plus élevé (3) acquiert des informations d'état d'exécution de PST pour chacun des positionneurs (2), évalue si, oui ou non, un lancement de PST est autorisé, sur la base des états d'exécution de PST des positionneurs (2) individuels, et, si un lancement de PST est autorisé, envoie (S207) une instruction de lancement de PST au premier positionneur, si une synchronisation (S206) pour un lancement de PST a été atteinte sur la base de la planification.

8. Procédé d'exécution de PST selon la revendication 6, dans lequel
l'étape d'évaluation d'interdiction de lancement de PST (S101) est en outre conçue pour mesurer un débit d'un fluide de processus à travers une soupape de détente d'urgence correspondante, et pour évaluer si, oui ou non, un lancement de PST est autorisé, sur la base des états d'exécution de PST desdits un ou plusieurs deuxièmes positionneurs (2) et d'un débit d'un fluide de processus à travers une soupape de détente d'urgence correspondante, lorsqu'une instruction de lancement de PST a été reçue par le premier positionneur, pour commander l'ouverture d'une soupape de détente d'urgence qui est prévue dans un tuyau dans une installation, d'un système de niveau plus élevé (3) qui gère les PST sur la soupape de détente d'urgence (1) ou d'un dispositif d'entrée sur le sol de l'installation où le premier positionneur est prévu.

9. Procédé d'exécution de PST selon la revendication 7, dans lequel
la première étape d'évaluation d'interdiction de lancement de PST est en outre conçue pour acquérir une valeur de mesure de débit d'un instrument de mesure de débit (9) pour mesurer un débit d'un fluide de processus à travers une soupape de détente d'urgence (1) correspondante, et pour évaluer si, oui ou non, un lancement de PST est autorisé, sur la base des états d'exécution de PST desdits un ou plusieurs deuxièmes positionneurs (2) et d'un débit d'un fluide de processus à travers une soupape de détente d'urgence correspondante, et pour rapporter au premier positionneur, lorsqu'il y a eu une interrogation du premier positionneur (2) pour savoir si, oui ou non, un lancement de PST est autorisé ; et
la deuxième étape d'évaluation d'interdiction de lancement de PST est en outre conçue pour acquérir une valeur de mesure de débit d'un instrument de mesure de débit (9) pour mesurer un débit d'un fluide de processus à travers une soupape de détente d'urgence (1) correspondante, pour évaluer si, oui ou non, un lancement de PST est autorisé, sur la base des états d'exécution de PST desdits un ou plusieurs deuxièmes positionneurs et d'un débit d'un fluide de processus à travers une soupape de détente d'urgence (1) pour laquelle la synchronisation de lancement de PST a été atteinte, et pour envoyer, au premier positionneur, une instruction de lancement de PST si un lancement de PST est autorisé, lorsqu'une synchronisation de lancement de PST a été atteinte sur la base d'une planification.

10. Procédé d'exécution de PST selon la revendication 7, dans lequel :
la première étape d'évaluation d'interdiction de lancement de PST, lorsqu'il y a eu une interrogation (S201) du premier positionneur (2) pour savoir si, oui ou non, un lancement de PST est autorisé, évalue si, oui ou non, un lancement de PST est autorisé, sur la base des états d'exécution de PST de chacun desdits un ou plusieurs deuxièmes positionneurs (2) et selon qu'un deuxième positionneur qui exécute un PST appartient ou non au même système de tuyaux (1) que le premier positionneur qui a effectué l'interrogation, et rapporte au premier positionneur ; et
la deuxième étape d'évaluation d'interdiction de lancement de PST, si une synchronisation pour un lancement de PST a été atteinte (S206) sur la base de la planification, évalue si, oui ou non, un lancement de PST est autorisé sur la base des états d'exécution de PST des positionneurs individuels et selon qu'un deuxième positionneur qui exécute un PST appartient ou non au même système de tuyaux que le premier positionneur correspondant à la soupape de détente d'urgence (1) pour laquelle la synchronisation de lancement de PST a été atteinte, et, si un lancement de PST est autorisé, envoie une instruction de lancement de PST au premier positionneur.
